# EUROPÄISCHE PATENTSCHRIFT

(11) **EP 1 344 003 B1**
(45) Veröffentlichungstag und Bekanntmachung des Hinweises auf die Patenterteilung: **20.07.2005**
(21) Anmeldenummer: 01984821.7
(22) Anmeldetag: 11.12.2001
(51) Int. Cl.: F24C 7/08, G01K 7/00

(54) **VERFAHREN ZUM FÜHREN EINES GARPROZESSES MIT EINEM GARPROZESSFÜHLER**
METHOD FOR CONDUCTING A COOKING PROCESS WITH A COOKING PROCESS PROBE
PROCEDE DE REALISATION D'UN PROCESSUS DE CUISSON AU MOYEN D'UNE SONDE DE PROCESSUS DE CUISSON

(30) Priorität: 12.12.2000 DE 10061821
(43) Veröffentlichungstag der Anmeldung: 17.09.2003
(73) Patentinhaber: Rational AG, 86899 Landsberg/Lech (DE)
(72) Erfinder: GREINER, Michael, 85354 Freising (DE); JÜRGENS, Andrea, 85551 Kirchheim (DE); WALLENWEIN, Katharina, 86947 Weil (DE); KLASMEIER, Jürgen, 86807 Buchloe (DE); KLOUDA, Jaroslav, 82256 Fürstenfeldbruck (DE); MARKUS, Rene, 86875 Emmenhausen (DE); REICHMANN, Christoph, 86916 Kaufering (DE)
(74) Vertreter: Weber-Bruls, Dorothée, Dr.
(86) Internationale Anmeldenummer: PCT/EP2001/014509
(87) Internationale Veröffentlichungsnummer: WO 2002/047522

(56) Entgegenhaltungen:
- DE-A- 3 104 926
- DE-A- 3 119 496
- DE-A- 4 032 949
- US-A- 4 083 250

## Beschreibung

Es sind Verfahren bekannt, mit denen sich aus einer ermittelten Kerntemperatur eines Garguts, insbesondere in Form eines Fleichstückes, die weitere Prozeßführung eines Garvorgangs ableiten läßt. Diese Verfahren führen aber zu unbefriedigenden und nicht reproduzierbaren Garergebnissen, wenn der Sensor zur Ermittlung der Kerntemperatur nicht exakt im Kern des Fleischstücks positioniert wird und somit nicht die Temperatur im Kern, sondern an einer anderen Stelle im Gargut erfaßt wird.

Daher sind Garprozeßfühler zum Führen eines Garprozesses entwickelt worden, mit denen mehrere Temperaturwerte innerhalb eines Gargutes und zumindest ein weiterer Temperaturwert außerhalb des Gargutes, vorzugsweise an der Gargutoberfläche, erfaßbar sind, siehe DE 299 23 215 U1. Über die im Gargut erfaßten Temperaturwerte läßt sich dabei die Kerntemperatur des Gargutes beim Garen bestimmen, selbst wenn der Garprozeßfühler nicht exakt im Kern positioniert worden ist, durch Extrapolation der entsprechenden zeitlichen Verläufe. Somit läßt sich ein Garprozeß unter Einsatz eines bekannten Garprozeßfühlers, der in ein Gargut eingestochen ist, reproduzierbar steuern und dessen Dauer genau vorausbestimmen. Der bekannte Garprozeßfühler beinhaltet jedoch keine Erkennungsmöglichkeiten dahingehend, ob der Garprozeßfühler überhaupt in das Gargut eingestochen worden ist, oder sich durch Fehlbedienung versehentlich im Garraum, außerhalb des Garguts, oder gar außerhalb des Garraums befindet. In solchen Fällen der Fehlstechung ergeben sich für die Garprozeßführung irrelevante und unsinnige Temperaturwerte, die, wenn sie zur Garprozeßführung herangezogen werden, den Garprozeß fehlsteuern.

Aus der DE-A-31 04 926 ist eine an einem Garprozeßfühler vorgesehene Indikationseinrichtung bekannt, mittels der der Widerstandswert eines Gargutes gemessen und mit einem vorgegebenen Bezugswert verglichen wird. Überschreitet dabei die Differenz zwischen dem gemessenen Widerstandswert und dem Bezugswert einen vorgegebenen Schwellenwert, so wird geschlußfolgert, daß sich der Garprozeßfühler nicht im Gargut befindet, und der Garprozeß abgebrochen. Nachteilig bei diesem Garprozeßfühler ist jedoch, daß zusätzlich zu dem Temperatursensor die Indikationseinrichtung und zugehörige Verarbeitungseinrichtung zum Bestimmen des Widerstandswertes erforderlich sind, und daß sowohl die Festlegung des Bezugswertes, als auch des Schwellenwertes mit einer gewissen Unsicherheit behaftet ist, was selbst zu einem unnötigen Abbruch des Garprozesses führen kann.

Ferner ist aus der US 6,142,666 ein Diagnosesystem zur Überwachung von Garprofilen bekannt, das neben einer Anzeige ein Abspeichern von thermischen Signaturen oder Charakteristiken während eines Betriebsmodus einer Gareinrichtung ermöglicht. Diese thermischen Signaturen oder Charakteristiken werden von einem Temperatursensor gemessen, der auch genutzt wird, um die Gartemperatur zu regulieren, gesammelt und dann in einer Tabelle gespeichert. Aus den gespeicherten thermischen Signaturen, die vorzugsweise erste oder auch höhere Ableitungen der Temperatur umfassen, wird über das Diagnosesystem ermittelt, ob das Gargerät unter normalen Betriebsbedingungen arbeitet. Es kann auch vorgesehen sein, daß gesamte Garprofile aufgenommen, graphisch dargestellt und mit einem Bezugsgarprofil verglichen werden, um einerseits den Gargutzustand anzuzeigen und andererseits durch die Bezugsprofile mittels des Diagnosesystems zwischen normalen und fehlerhaften Garzuständen zu unterscheiden. Nachteilig bei diesem Diagnosesystem ist jedoch, daß mit dem Temperatursensor nur die Temperatur eines Garmediums und nicht des Garguts meßbar ist. Ferner kann das Diagnosesystem nicht eine bestimmte Fehlbedienung, insbesondere eine falsche Anordnung des Temperatursensors, identifizieren, um eine entsprechende Steuerung des Gargeräts vorzunehmen. Ferner erfordert das Diagnosesystem eine umfangreiche elektronische Schaltung inklusive Speichereinheiten, was die Kosten des Diagnosesystems erhöht.

Weiterhin ist in der DE 198 55 971 A1 ein Verfahren zur Überwachung eines Temperatursensors für ein Automatikgetriebe eines Kraftfahrzeugs offenbart. Bei diesem Verfahren wird entweder während des Kaltstarts der Offset-Fehler des Temperatursensors durch Differenzbildung mit einer Vergleichstemperatur, z. B. der Motortemperatur oder der Außentemperatur, und des vom Temperatursensor gemessenen Temperaturwerts bestimmt, oder bis zum Erreichen einer vorgegebenen Grenztemperatur die zeitliche Ableitung der vom Temperatursensor gelieferten Werte gebildet und kontrolliert, ob diese innerhalb vorgegebener Grenzwerte liegen. Nachteilig bei diesen Verfahren ist jedoch, daß mit demselben keine Bestimmung einer Fehlerart des Temperatursensors möglich ist, sondern nur allgemein eine Abweichung von einem Normverhalten überwacht wird.

Aufgabe der Erfindung ist es deshalb, ein Verfahren zum Führen eines Garprozesses mit einem Garprozeßfühler zu liefern, mit dem die Nachteile des Stands der Technik überwunden werden, insbesondere eine fehlenden bzw. nicht erfolgte oder nicht korrekt erfolgte Stechung des Garprozeßfühlers in das Gargut festgestellt und gehandhabt wird.

Diese Aufgabe wird erfindungsgemäß gelöst durch die Merkmale von Anspruch 1.

Bevorzugte Ausführungsformen des erfindungsgemäßen Verfahrens sind in den Ansprüchen 2 bis 8 beschrieben.

Durch Aussenden von Warnsignalen bei einer erkannten fehlenden Stechung, im Anschluß kurz als Fehlstechung bezeichnet, soll einer Bedienperson eines Gargerätes ermöglicht werden, den Bedienfehler, nämlich in Form eines nicht in ein Gargut eingestochenen Garprozeßfiihlers, frühzeitig zu erkennen und zu beheben, so daß der Garprozeß auf der Grundlage der durch den Garprozeßfühler ermittelten Temperaturwerte in bekannter Weise gesteuert werden kann und damit optimale Garergebnisse erzielt werden können. Weiterhin wird durch das automatische Erfassen einer Fehllage des Garprozeßfühlers und Erkennen der Art der Fehllage eine Fehlsteuerung des Garprozesses auf der Grundlage der durch von einem nicht in ein Gargut eingestochenen oder sich außerhalb des Garraums befindlichen Garprozeßfühler ermittelten Temperaturwerte vermieden, nämlich durch den Wechsel von dem Garprogramm in ein Notprogramm, wenn der Garprozeßfühler im Garraum fehlplaziert ist, oder Abbrechen des Garprogramms, wenn sich der Garprozeßfühler außerhalb des Garraums befindet. Dadurch ist gleichzeitig ein Überhitzungsschutz gewährleistet.

Weitere Merkmale und Vorteile der Erfindung ergeben sich aus der nachfolgenden, detaillierten Beschreibung von Ausführungsbeispielen unter Bezug auf die beigefügten, schematischen Zeichnungen. Dabei zeigt:
- Figur 1: eine schematische Darstellung eines für das Verfahren der vorliegenden Erfindung genutzten Garprozeßfühlers;
- Figuren 2a und 2b: jeweils ein Flußdiagramm einer ersten Ausführungsform des erfindungsgemäßen Verfahrens;
- Fig. 3: ein Flußdiagramm einer zweiten Ausführungsform des erfindungsgemäßen Verfahrens; und
- Fig. 4: ein Flußdiagramm einer dritten Ausführungsform des erfindungsgemäßen Verfahrens.

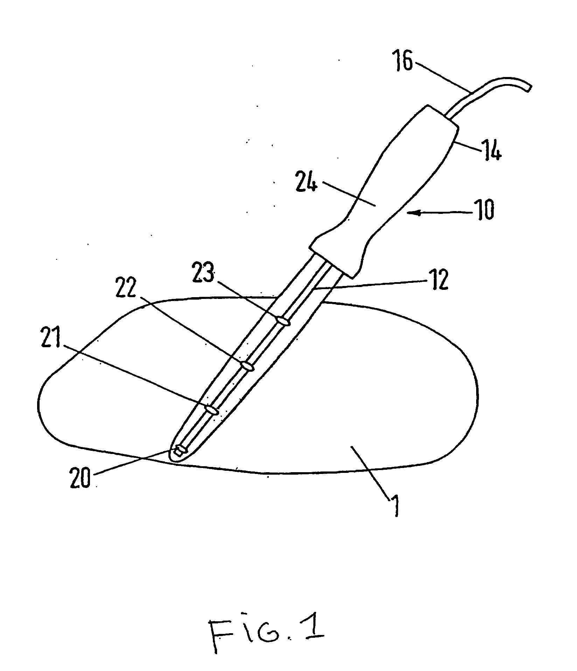

In Fig. 1 ist ein für das Verfahren der vorliegenden Erfindung verwendbarer Garprozeßfühler 10 dargestellt, der eine Spitze 12, einen Griff 14 und ein Kabel 16 aufweist, wobei die Spitze 12 in ein Gargut 1 einführbar ist. Im Bereich der Spitze 12 sind vier Temperatursensoren 20, 21, 22, 23 angeordnet, die dem Erfassen der Temperatur im Gargut 1 dienen, während im Griff 14 ein weiterer, fünfter Temperatursensor 24 zum Erfassen der Temperatur im Gargut 1, vorzugsweise an dessen Oberfläche, angeordnet ist. In den Garprozeßfühler 10 ist eine nicht gezeigte Auswerteeinheit für erfaßte Temperaturwerte integriert. Diese Auswerteeinheit ist ihrerseits mit einer nicht gezeigten Steuerung für ein Gargerät verbunden. Da mit dem vorliegenden Garprozeßfühler 10 mehr als ein Temperaturwert in dem und ein weiterer Temperaturwert am Gargut 1 erfaßbar ist, kann aus dem Temperaturverlauf der mit den Temperatursensoren 20-24 erfaßten Temperaturdifferenzwerte, beispielsweise durch Extrapolation, die tatsächliche Kerntemperatur des Garguts 1 bestimmt werden, selbst wenn der Garprozeßfühler 10 nicht exakt durch den Kern des Garguts 1 gesteckt ist, wie in der DE 299 23 215.8 beschrieben. Die mit dem Garprozeßfühler 10 ermittelte Kerntemperatur KT sowie Oberflächentemperatur T₀ können zum Erkennen einer Fehlbedienung, insbesondere einer Fehlstechung, des Garprozeßfühlers 10 nach der Erfindung herangezogen werden, wie im Anschluß erläutert.

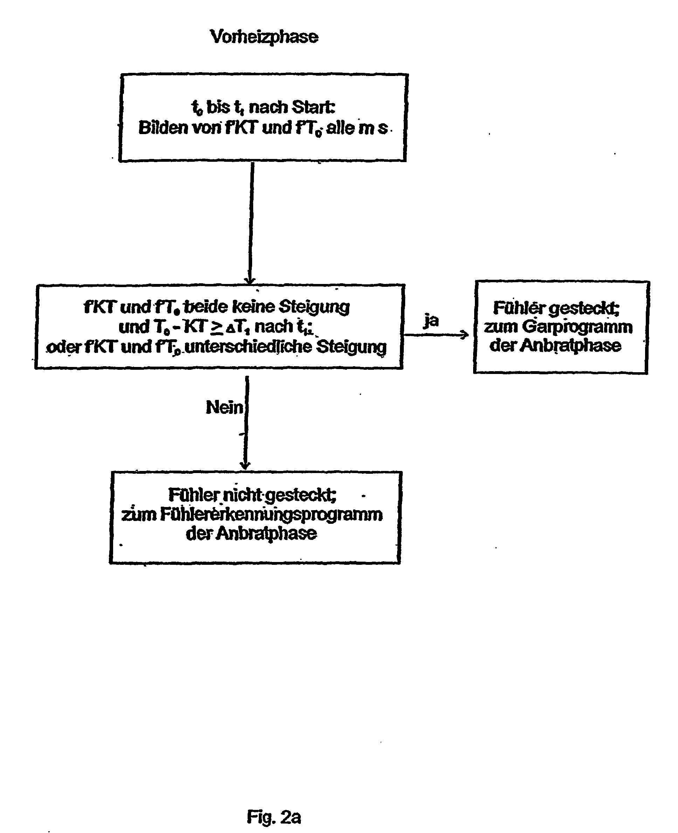

Gemäß einer ersten bevorzugten Ausführungsform der Erfindung wird, wie in Fig. 2a dargestellt, während einer Vorheizphase erkannt, ob der Garprozeßfühler 10 in ein Gargut 1 gesteckt ist, oder nicht, indem die Auswerteeinheit auf der Grundlage der durch die Temperatursensoren 20-24 erfaßten Temperaturwerte ab einem Zeitpunkt tₒ nach Start einer Beheizung eines nicht gezeigten Garraumes alle m Sekunden eine erste Ableitung fKT der ermittelten Kerntemperatur KT und eine erste Ableitung f'T₀ der erfaßten Oberflächentemperatur T₀ nach der Zeit in der Approximation durch einen Differenzenquotienten bildet, wobei die Oberflächentemperatur T₀ über den Temperatursensor 24 erfaßt und die Kerntemperatur KT durch Extrapolation aus den von den Temperatursensoren 20-23 gemessenen Temperaturwerte ermittelt wird. Falls sich ergibt, daß die ersten Abteilungen fKT, f'T₀ der ermittelten Kerntemperatur KT, als auch der erfaßten Oberflächentemperatur T₀ nach einer Zeitdauer t₁ keine Steigung aufweisen und gleichzeitig die Differenz zwischen der erfaßten Oberflächentemperatur T₀ und der ermittelten Kerntemperatur KT zum Zeitpunkt t₁ nach dem Start der Heizluftheizung größer oder gleich einem ersten Schwellenwert ΔT₁ ist, oder falls die ersten Ableitungen fKT, f'T₀ der ermittelten Kerntemperatur KT und der erfaßten Oberflächentemperatur T₀ unterschiedliche Steigungen aufweisen, ist zu schlußfolgern, daß der Garprozeßfühler in der Vorheizphase korrekt in das Gargut eingesteckt ist und zu der Anbratphase übergegangen werden kann, ohne daß eine erneute Fühlererkennung notwendig ist. Ansonsten wird das Vorliegen einer Fehlstechung gefolgert.

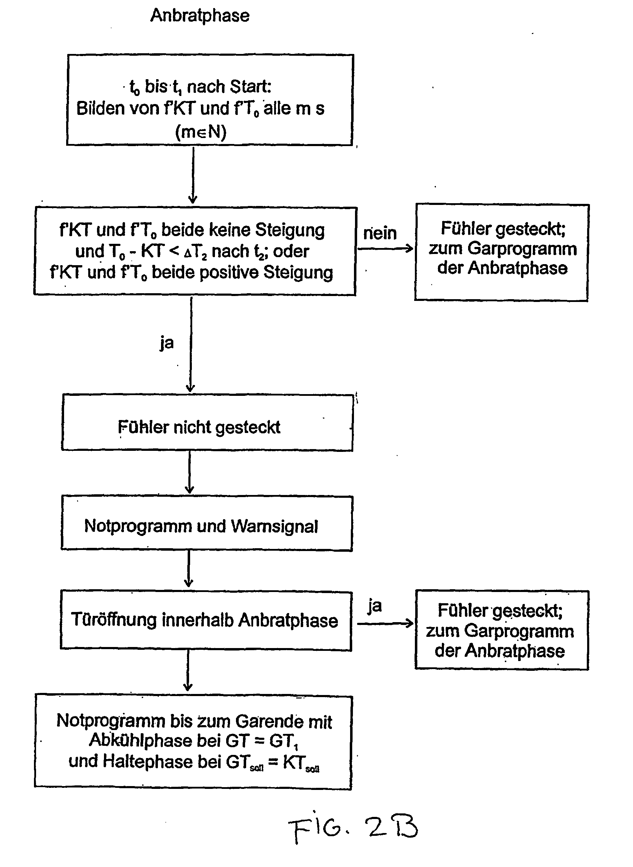

Wird während der Vorheizphase bestimmt, daß der Garprozeßfühler nicht in das Gargut eingesteckt ist, oder sollte die Vorheizphase ausgelassen werden, so erfolgt die Erkennung, ob der Garprozeßfühler in das Gargut eingesteckt ist, oder nicht, in der Anbratphase, wie in Fig. 2b dargestellt. Dabei wird wieder ab einem Zeitpunkt t₀ nach Beginn der Anbratphase alle m Sekunden eine erste Ableitung f'KT der ermittelten Kerntemperatur KT und eine erste Ableitung f'T₀ der erfaßten Oberflächentemperatur T₀ nach der Zeit in der Approximation durch einen Differenzenquotienten gebildet. Falls es sich ergibt, daß die ersten Ableitungen fKT, f'T₀ der ermittelten Kerntemperatur KT als auch der erfaßten Oberflächentemperatur T₀ keine Steigung aufweisen und gleichzeitig die Differenz zwischen der erfaßten Oberflächentemperatur T₀ und der ermittelten Kerntemperatur KT zu einem Zeitpunkt t₂ nach Beginn der Anbratphase kleiner einem zweiten Schwellenwert ΔT₂ ist, oder falls die Ableitungen f'KT, f'T₀ der ermittelten Kerntemperatur KT und der erfaßten Oberflächentemperatur T₀ beide positive Steigungen aufweisen, ist zu schlußfolgern, daß der Garprozeßfühler auch in der Anbratphase nicht gesteckt worden ist. Ansonsten wird von einer korrekten Stechung des Garprozeßfühlers in das Gargut ausgegangen.

Bei erfaßter Fehlstechung in der Anbratphase wird auf ein Notprogramm umgeschaltet, um zu verhindern, daß das Garprogramm durch die Verwendung fälschlich ermittelter und damit für die Garprozeßführung irrelevanter Werte fehlgesteuert wird. Gleichzeitig werden zur Fehlermeldung akustische Signale, wie in Form von Huptönen, und optische Signale, wie in Form von auf einem nicht gezeigten Uhren- bzw. Gartemperaturdisplay des Gargerätes blinkenden Wörter "SENSOR" und "POSITION", ausgegeben. Die Warnsignalgebung erfolgt während des gesamten Notprogramms.

Kommt es aufgrund besagter Warnsignale zur Öffnung einer nicht gezeigten Garraumtür während der Anbratphase, wobei davon auszugehen ist, daß dann der Garprozeßfühler nachträglich von einer Bedienperson richtig in Gargut eingesteckt wird, so wird das Garprogramm mittels der durch den nunmehr voraussichtlich richtig gesteckten Garprozeßfühler ermittelten Temperaturwerte und Temperaturverläufe in bekannter Weise geführt.

Wird die Fehlstechung erst nach der Anbratphase erkannt, so wird auch bei nachträglichem Stecken des Garprozeßfühlers in das Gargut das Notprogramm weitergeführt, da nun eine sinnvolle Korrektur nicht mehr möglich ist.

Das Notprogramm zeichnet sich dadurch aus, daß die Anbratphase normal weitergeführt wird, in einer anschließenden Abkühlphase die Garraumtemperatur GT zum Führen des Garprozesses herangezogen wird, bis sie einen ersten Schwellenwert GT₁ erreicht hat, eine an für sich folgende Reifephase übersprungen wird, und während einer abschließenden Haltephase die Garraumtemperatur GT nicht auf der Grundlage der mittels des Garprozeßfühlers ermittelten augenblicklichen Kerntemperatur, sondern auf eine gewünschte Soll-Kemtemperatur KTₛₒₗₗ zuzüglich eines Zugabewerts, wie z.B. KTₛₒₗₗ + 2-15°C, geregelt wird.

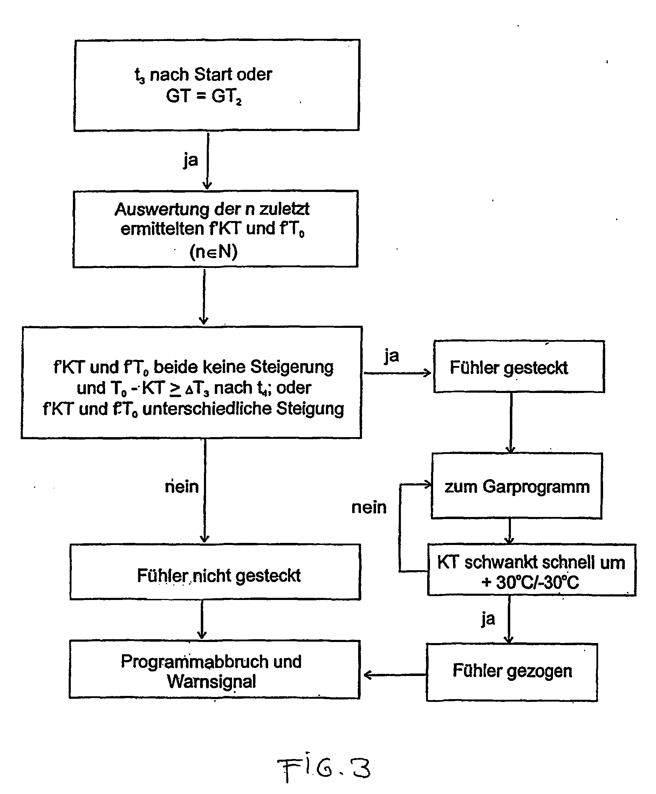

Bei einer alternativen, zweiten Ausführungsform des erfindungsgemäßen Verfahrens, das in Fig. 3 dargestellt ist, wird erkannt, ob der Garprozessfühler bei Programmstart bereits in das Gargut eingesteckt ist, oder nicht. Dabei werden ab dem Zeitpunkt des Schließens der Garraumtür jeweils die ersten Ableitungen f'KT, f'T₀ der ermittelten Kerntemperatur KT und der durch den Temperatursensor 24 erfaßten Oberflächentemperatur T₀ nach der Zeit in der Approximation durch einen Differenzenquotienten gebildet, wobei die Kerntemperatur KT wieder durch Extrapolation aus den durch die Temperatursensoren 20-23 im Gargut erfaßten Temperaturwerte ableitbar ist.

Wenn ein über einen nicht gezeigten, vom Garprozeßfühler unabhängigen Temperatursensor erfaßter Schwellenwert GT₂ erreicht ist, oder, falls der Garraum bei Programmstart bereits die Temperatur des Schwellenwerts GT₁ aufweist, nach Ablauf einer Zeitdauer t₃, werden rückwirkend die zuletzt gebildeten n Ableitungen fKT, f'T₀ ausgewertet und zum Erkennen der Fühlersteckung herangezogen. Weisen die ersten Ableitungen f'KT, f'T₀ der ermittelten Kerntemperatur KT als auch der erfaßten Oberflächentemperatur T₀ nach der Zeit dabei keine Steigung auf und ist zugleich die Differenz zwischen der erfaßten Oberflächentemperatur T₀ und der ermittelten Kerntemperatur KT zu einem Zeitpunkt t₄ nach Programmstart größer oder gleich einem dritten Schwellenwert ΔT₃, oder weisen die ersten Ableitungen f'KT, f'T₀ der ermittelten Kerntemperatur KT und der erfaßten Oberflächentemperatur T₀ unterschiedliche Steigungen auf, so ist davon auszugehen, daß der Garprozeßfühler 10 richtig in das Gargut 1 gesteckt ist, und der Garprozeß kann in bekannter Weise über ein Garprogramm unter Ausnutzung der ermittelten Kerntemperatur KT gesteuert werden. In allen anderen Fällen ist davon auszugehen, daß der Garprozeßfühler nicht korrekt in das Gargut eingesteckt ist.

Bei Fehlstechung werden die bereits in Verbindung mit der ersten Ausführung genannten optischen und akustischen Signale abgegeben, zumindest bis die Garraumtür des Garraums geöffnet wird, um die Fehlstechung zu beheben. Gleichzeitig wird bei Erkennen, daß der Garprozeßfühler nicht in das Gargut eingesteckt ist, das Garprogramm abgebrochen.

Wird bei ursprünglich erfaßter korrekter Stechung des Garprozeßfühlers während des weiteren Garverlaufs festgestellt, daß die durch den Garprozeßfühler ermittelte augenblickliche Kerntemperatur KT schnell um bis zu ca. + 30°C/-30°C schwankt, so ist daraus zu schließen, daß der Garprozeßfühler während des Garverlaufs gezogen worden oder gebrochen ist. In diesem Fall wird das Garprogramm ebenfalls abgebrochen, und es werden bis zur Türöffnung die bereits genannten optischen und akustischen Signale abgegeben.

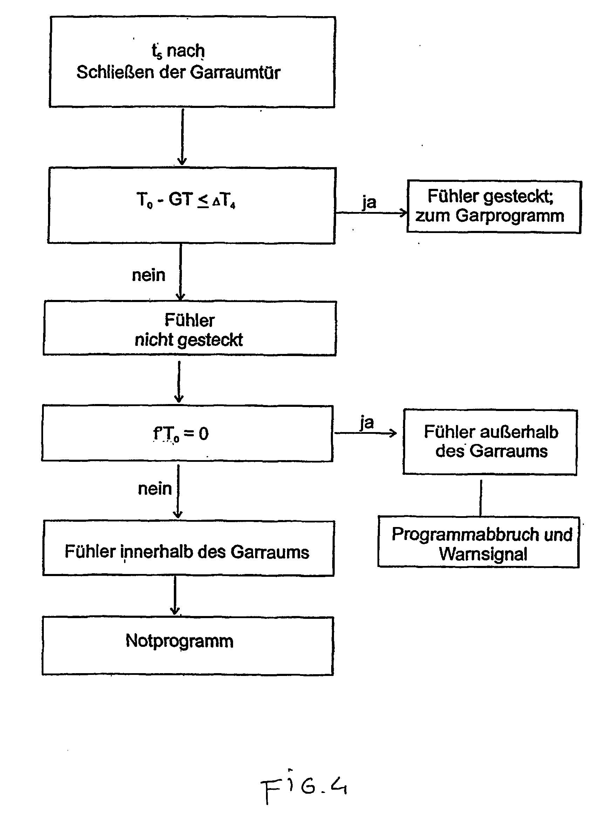

Bei einem weiteren alternativen Programmablauf gemäß einer dritten Ausführungsform der Erfindung, die in Fig. 4 dargestellt ist, wird nach einer Zeitdauer t₅ nach Schließen der Garraumtür die durch den Temperatursensor 24 erfaßte Oberflächentemperatur T₀ des Garguts überprüft und mit der über einen weiteren, nicht gezeigten Temperatursensor erfaßten Garraumtemperatur GT verglichen. Ist die Differenz aus der erfaßten Oberflächentemperatur T₀ des Garguts und der erfaßten Garraumtemperatur GT größer als ein vierter Schwellenwert ΔT₄, so ist davon auszugehen, daß der Garprozeßfühler 10 nicht korrekt in das Gargut 1 eingesteckt ist. In allen anderen Fällen ist davon auszugehen, daß der Garprozeßfühler korrekt eingesteckt ist.

Bei Fehlstechung wird geprüft, ob sich der Garprozeßfühler im Garraum oder außerhalb des Garraums befindet. Steigt die erfaßte Oberflächentemperatur T₀ trotz ständiger Heizanforderungen nicht an, so läßt sich schlußfolgern, daß sich der Garprozeßfühler außerhalb des Garraums befindet, weshalb dann das Garprogramm unter gleichzeitiger Abgabe von Warnsignalen akustischer und/oder optischer Natur abgebrochen wird. Ist der Garprozeßfühler nicht korrekt gesteckt und wird erkannt, daß sich der Garprozeßfühler nicht außerhalb des Garraums, also im Garraum befindet, wird das Garprogramm in kürzester Zeit über eine Notregelung unter Einsatz des unabhängig von dem Garprozeßfühler im Garraum vorgesehenen Temperatursensors zu Ende geführt. Wieder findet die Notregelung in Verbindung mit der Abgabe von akustischen und optischen Signalen statt.

Die in der voranstehenden Beschreibung, in den Ansprüchen und in den Zeichnungen offenbarten Merkmale der Erfindung können sowohl einzeln, als auch in jeder beliebigen Kombination für die Realisierung der Erfindung in ihren verschiedenen Ausführungsformen wesentlich sein.

### Bezugszeichenliste

- 1: Gargut
- 10: Temperaturfühler
- 12: Spitze
- 14: Griff
- 16: Kabel
- 20: Temperatursensor
- 21: Temperatursensor
- 22: Temperatursensor
- 23: Temperatursensor
- 24: Temperatursensor

- KT: Kerntemperatur
- T₀: Oberflächentemperatur
- GT: Garraumtemperatur

## Patentansprüche

1. Verfahren zum Führen eines Garprozesses mit einem Garprozeßfühler unter Unterscheidung zwischen
- einer Stechung des Garprozeßfühlers in ein Gargut, bei der zumindest ein Temperatursensor des Garprozeßfühlers zur Erfassung der Kerntemperatur KT im Gargut und ein Temperatursensor des Garprozeßfühlers zur Erfassung der Oberflächentemperatur Tₒ an der Oberfläche des Garguts angeordnet sind, oder
- einer fehlenden Stechung des Garprozeßfühlers in das Gargut, bei der kein Temperatursensor in dem Gargut angeordnet ist, wobei bei einer fehlenden Stechung wiederum unterschieden wird zwischen
- einer Anordnung des Garprozeßfühlers im Garraum oder
- einer Anordnung des Garprozeßfühlers außerhalb des Garraums, über eine Auswertung der mit den Temperatursensoren des Garprozeßfühlers erfaßten Temperaturverläufe, so daß
- bei erkannter Stechung des Garprozeßfühlers der Normalbetrieb des Garprozesses fortgeführt wird,
- bei erkannter fehlender Stechung Warnsignale, akustischer und/oder optischer Natur, erzeugt werden,
- bei erkannter fehlender Stechung einschließlich erkannter Anordnung des Garprozeßfühlers in Garraum ein Notprogramm durchlaufen wird, und
- bei erkannter fehlender Stechung einschließlich erkannter Anordnung des Garprozeßfühlers außerhalb des Garraums der Garprozeß abgebrochen wird.

2. Verfahren nach Anspruch 1, **dadurch gekennzeichnet, daß** das Erfassen von Temperaturverläufen ein Ermitteln erster Ableitungen der Oberflächentemperatur Tₒ als auch der Kerntemperatur KT nach der Zeit t umfaßt, und eine fehlende Stechung erkannt wird
- in einer Vorheizphase,
wenn die ersten Ableitungen der Oberflächentemperatur Tₒ als auch der Kerntemperatur KT nach der Zeit t eine Steigung aufweisen und die Differenz zwischen der Kerntemperatur KT und der Oberflächentemperatur Tₒ zu einem ersten Zeitpunkt t₁ nach Beginn des Vorheizprozesses kleiner einem ersten Schwellenwert ΔT₁ ist, oder
wenn die Ableitungen der Oberflächentemperatur Tₒ und der Kerntemperatur KT nach der Zeit t gleiche Steigungen aufweisen, und/oder
- in einer Anbratphase,
wenn die ersten Ableitungen der Oberflächentemperatur Tₒ als auch der Kerntemperatur KT nach der Zeit t keine Steigung aufweisen und die Differenz zwischen der Oberflächentemperatur Tₒ und der Kerntemperatur KT zu einem zweiten Zeitpunkt t₂ nach Beginn des Anbratprozesses kleiner als ein zweiter Schwellenwert ΔT₂, der vorzugsweise dem ersten Schwellenwert ΔT₁ entspricht, ist, oder
wenn die Ableitungen der Oberflächentemperatur Tₒ und der Kerntemperatur KT nach der Zeit beide eine positive Steigung aufweisen.

3. Verfahren nach Anspruch 2, **dadurch gekennzeichnet, daß**
im Notprogramm die Anbratphase im wesentlichen nicht beeinflußt wird, eine Abkühlphase der Anbratphase folgt, während der ein Führen des Garprozesses in Abhängigkeit von einer Garraumtemperatur GT stattfindet, bis die Garraumtemperatur GT einen ersten Schwellenwert GT₁ erreicht, und sich an die Abkühlphase eine Haltephase anschließt, während der eine Führung des Garprozesses in Abhängigkeit von der Garraumtemperatur GT stattfindet, wobei die Garraumtemperatur GT auf einen Sollwert der Kerntemperatur KT_{Soll} + 2-15°C geregelt wird.

4. Verfahren nach einem der vorangehenden Ansprüche, **dadurch gekennzeichnet, daß**
bei erkannter fehlender Stechung nach Öffnen einer Tür zum Garraum, insbesondere während der Anbratphase, das Notprogramm beendet und zu dem Garprogramm zurückgekehrt wird.

5. Verfahren nach Anspruch 1, **dadurch gekennzeichnet, daß**
das Erfassen von Temperaturverläufen ein Ermitteln erster Ableitungen der Kerntemperatur KT als auch der Oberflächentemperatur Tₒ nach der Zeit umfaßt, und
eine fehlende Stechung erkannt wird aus den n zuletzt vor Erreichen eines dritten Zeitpunktes t₃ gebildeten ersten Ableitungen, wobei *n* ∈ *N* und der dritte Zeitpunkt t₃ bei Erreichen eines zweiten Schwellenwerts GT₂ der Garraumtemperatur GT oder durch Ablauf einer vorbestimmten Zeitspanne, über die insbesondere die Garraumtemperatur GT den zweiten Schwellenwert GT₂ aufweist, vorliegt,
- wenn die ersten Ableitungen der Kerntemperatur KT als auch der Oberflächentemperatur Tₒ nach der Zeit keine Steigung aufweisen und die Differenz zwischen der Oberflächentemperatur Tₒ und der Kerntemperatur KT zu einem vierten Zeitpunkt t₄ nach Beginn des Programms kleiner als ein dritter Schwellenwert ΔT₃ ist, oder
- wenn die ersten Ableitungen der Kerntemperatur KT und der Oberflächentemperatur Tₒ nach der Zeit gleiche Steigungen aufweisen, umfaßt.

6. Verfahren nach einem der vorangehenden Ansprüche, **dadurch gekennzeichnet, daß**
bei erkannter Stechung nach Erfassen schneller Schwankungen der Kerntemperatur KT, insbesondere um bis zu ca. +30/-30°C, während des Garverlaufs eine Fehlfunktion erkannt und zumindest ein Warnsignal, optischer und/oder akustischer Natur, erzeugt wird.

7. Verfahren nach Anspruch 1, 4 oder 6, **dadurch gekennzeichnet, daß**
das Erfassen von Temperaturverläufen ein Ermitteln von Differenzen zwischen der Oberflächentemperatur Tₒ und einer Garraumtemperatur GT umfaßt, und
eine fehlende Stechung erkannt wird, wenn die Differenz zwischen der Oberflächentemperatur Tₒ und der Garraumtemperatur GT größer als ein vierter Schwellenwert ΔT₄ zu einem fünften Zeitpunkt t₅ ist.

8. Verfahren nach Anspruch 8, **dadurch gekennzeichnet, daß**
bei erkannter fehlender Stechung erste Ableitungen der Oberflächentemperatur Tₒ ermittelt werden und
erkannt wird, daß sich der Garprozeßfühler im Garraum befindet, wenn die ersten Ableitungen der Oberflächentemperatur Tₒ ungleich Null sind, und ansonsten außerhalb des Garraums angeordnet ist.

## Claims

1. Method for controlling a cooking process with a cooking process probe while distinguishing between
- the insertion of the cooking process probe in an item for cooking, in which case at least one temperature sensor of the cooking process probe is disposed in the item for cooking to detect the core temperature KT and one temperature sensor of the cooking process probe is disposed at the surface of the item for cooking to detect the surface temperature T_{0,} or
- the non-insertion of the cooking process probe in the item for cooking, in which case no temperature sensor is disposed in the item for cooking, wherein, in the case of non-insertion a distinction is in turn made between
- the cooking process probe being disposed in the cooking space or
- the cooking process probe being disposed outside of the cooking space, by evaluating the temperature variations detected by the temperature sensors of the cooking process probe, so that
- the normal operation of the cooking process is continued upon identifying the insertion of the cooking process probe,
- warning signals of an acoustic and/or optical nature are generated upon identifying non-insertion,
- an emergency program is executed upon identifying non-insertion including the disposal of the cooking process probe in the cooking space, and
- the cooking process is discontinued upon identifying non-insertion including the disposal of the cooking process probe outside of the cooking space.

2. Method according to Claim 1, **characterised in that**
the detection of temperature variations comprises the determination of first derivatives of the surface temperature T₀ as well as the core temperature KT with the time t, and non-insertion is identified
- in a preheating phase,
when the first derivatives of the surface temperature T₀ as well as the core temperature KT exhibit an increase with the time t and the difference between the core temperature KT and the surface temperature T₀ at a first instant t₁ after the beginning of the preheating process is less than a first threshold value ?T₁, or when the derivatives of the surface temperature T₀ and the core temperature KT exhibit the same increases with the time t, and/or
- in a searing phase,
when the first derivatives of the surface temperature T₀ as well as the core temperature KT exhibit no increase with the time t and the difference between the surface temperature T₀ and the core temperature KT at a second instant t₂ after the beginning of the searing process is less than a second threshold value ?T₂, which preferably corresponds to the first threshold value ?T₁, or
when the derivatives of the surface temperature T₀ and the core temperature KT both exhibit a positive increase with time.

3. Method according to Claim 2, **characterised in that**
the searing phase is essentially uninfluenced in the emergency program, the searing phase is followed by a cooling phase, during which the cooking process is controlled in accordance with a cooking space temperature GT until the cooking space temperature GT reaches a first threshold value GT₁, and the cooling phase is followed by a holding phase, during which the cooking process is controlled in accordance with the cooking space temperature GT, wherein the cooking space temperature GT is regulated to a desired value of the core temperature KT_{Soll} + 2-15°C.

4. Method according to any one of the preceding Claims, **characterised in that**
the emergency program is terminated and the cooking program resumed upon identifying non-insertion after opening a door to the cooking space, in particular during the searing phase.

5. Method according to Claim 1, **characterised in that**
the detection of temperature variations comprises the determination of first derivatives of the core temperature KT as well as the surface temperature T₀ with time, and
non-insertion is identified from the n first derivatives formed last before reaching a third instant t₃, wherein
*n* ε *N* and the third instant t₃ is attained upon reaching a second threshold value GT₂ of the cooking space temperature GT or through the expiry of a predetermined time interval over which the cooking space temperature GT in particular exhibits the second threshold value GT₂,
- when the first derivatives of the core temperature KT as well as the surface temperature T₀ exhibit no increase with time and the difference between the surface temperature T₀ and the core temperature KT at a fourth instant t₄ after beginning the program is less than a third threshold value ?T₃, or
- when the first derivatives of the core temperature KT and the surface temperature T₀ exhibit the same increases with time.

6. Method according to any one of the preceding Claims, **characterised in that**
a malfunction is identified and at least one warning signal of an optical and/or acoustic nature is generated upon identifying insertion after detecting rapid fluctuations in the core temperature KT, in particular by up to approximately +30/-30°C, in the course of cooking.

7. Method according to Claim 1, 4 or 6, **characterised in that**
the detection of temperature variations comprises the determination of differences between the surface temperature T₀ and a cooking space temperature GT, and non-insertion is identified when the difference between the surface temperature T₀ and the cooking space temperature GT is greater than a fourth threshold value ?T₄ at a fifth instant t₅.

8. Method according to Claim 8, **characterised in that**
first derivatives of the surface temperature T₀ are determined upon identifying non-insertion and
the presence of the cooking process probe in the cooking space is identified when the first derivatives of the surface temperature T₀ are not equal to zero, and otherwise it is disposed outside of the cooking space.

## Revendications

1. Procédé de réalisation d'un processus de cuisson avec une sonde de processus de cuisson, en distinguant entre
- un piquage de la sonde de processus de cuisson dans un produit à cuire, lors duquel sont disposés au moins un capteur de température de la sonde de processus de cuisson pour détecter la température à coeur KT dans le produit à cuire, et
un capteur de température de la sonde de processus de cuisson pour détecter la température en surface Tₒ à la surface du produit à cuire, où
- une absence de piquage de la sonde de processus de cuisson dans le produit à cuire, lors de laquelle aucun capteur de température n'est disposé dans le produit à cuire, où
en cas d'absence de piquage, de nouveau on distingue entre
- un agencement de la sonde de processus de cuisson à l'intérieur de l'enceinte de cuisson ou
- un agencement de la sonde de processus de cuisson à l'extérieur de l'enceinte de cuisson,
en opérant par l'intermédiaire d'une évaluation des évolutions de température appréhendées à l'aide des capteurs de température de la sonde de processus de cuisson, de manière que
- lorsque le piquage de la sonde de processus de cuisson est identifié, on continue le processus de cuisson en un fonctionnement normal,
- en cas d'absence identifiée d'un piquage, des signaux d'avertissement de nature acoustique et/ou optique sont produits,
- en cas d'absence identifiée de piquage, y compris en cas d'agencement identifié de la sonde de processus de cuisson de processus de cuisson à l'intérieur l'enceinte de cuisson, un programme de secours est accompli et
- en cas d'absence identifiée de piquage, y compris en cas d'agencement identifié de la sonde de processus de cuisson à l'extérieur de l'enceinte de cuisson, le processus de cuisson est interrompu.

2. Procédé selon la revendication 1, **caractérisé en ce que**
la détection des allures de températures comprend une détermination de dérivées premières, de la température en surface Tₒ ainsi qu'également de la température à coeur KT, en fonction du temps t, et
une absence piquage est identifiée
- en une phase de préchauffage,
lorsque les dérivées premières de la température en surface Tₒ, ainsi qu'également de la température à coeur KT en fonction du temps t, présentent une pente, et que la différence, entre la température à coeur KT et la température en surface Tₒ à un premier moment t₁ après le début du processus de préchauffage, est inférieure à une première valeur seuil ΔT₁, ou
lorsque les dérivés premières de la température en surface Tₒ et de la température à coeur KT, en fonction du temps t, présentent les mêmes pentes, et/ou
- en une phase de cuisson où l'on fait revenir,
lorsque les dérivées premières de la température en surface Tₒ, ainsi qu'également de la température à coeur KT, en fonction du temps t, ne présentent aucune pente, et que la différence, entre la température en surface Tₒ et la température à coeur KT, à un deuxième moment T₂ après le début du processus où l'on fait revenir, est inférieure à une deuxième valeur seuil ΔT₂ qui correspond de préférence à la première valeur seuil ΔT₁ ou bien lorsque les dérivées de la température en surface Tₒ et de la température à coeur KT, en fonction du temps, présentent toutes deux une pente positive.

3. Procédé selon la revendication 2, **caractérisé en ce que**,
dans le programme de secours, la phase de cuisson où l'on fait revenir n'est pratiquement pas influencée, une phase de refroidissement suit la phase de cuisson où l'on fait revenir, pendant laquelle est effectuée une conduite du processus de cuisson en fonction d'une température de l'enceinte de cuisson GT, jusqu'à ce que la température d'enceinte de cuisson GT atteigne une première valeur seuil GT₁ et à la phase de refroidissement fait suite une phase de maintien, pendant laquelle une conduite du processus de cuisson s'effectue en fonction de la température de l'enceinte de cuisson GT, la température de l'enceinte de cuisson GT étant régulée à une valeur de consigne de la température à coeur KT_{consigne} +2 à 15°C.

4. Procédé selon l'une des revendications précédentes,
**caractérisé en ce que**,
en cas d'absence identifiée du piquage, après ouverture d'une porte permettant l'accès à l'enceinte de cuisson, en particulier pendant la phase de cuisson où l'on fait revenir, le programme de secours est achevé et l'on revient au programme de cuisson.

5. Procédé selon la revendication 1, **caractérisé en ce que**
la détection des allures de températures comprend une détermination de dérivées premières, de la température à coeur KT ainsi qu'également de la température en surface Tₒ, en fonction du temps, et une absence de piquage est identifiée à partir des n dérivées premières formées en dernier avant l'atteinte d'un troisième instant t₃, sachant que n ∈N et que le troisième instant t₃ est celui que l'on a à l'atteinte d'une deuxième valeur seuil GT₂ de la température d'enceinte de cuisson GT ou par écoulement d'un intervalle de temps prédéterminé, sur la durée duquel en particulier la température d'enceinte de cuisson GT présente la deuxième valeur de seuil GT₂,
- lorsque les dérivées premières, de la température à coeur KT ainsi qu'également de la température en surface Tₒ, en fonction du temps, ne présentent aucune pente et que la différence, entre la température en surface Tₒ et la température à coeur KT, à un quatrième instant t₄ après le début du programme, est inférieure à une troisième valeur seuil ΔT₃, ou
- lorsque les dérivées premières, de la température à coeur KT et de la température en surface Tₒ en fonction du temps, présentent des pentes identiques.

6. Procédé selon l'une des revendications précédentes, **caractérisé en ce que**, lorsque le piquage est identifié après détection de fluctuations rapides de la température à coeur KT, en particulier jusqu'à environ +30/-30°C, pendant le déroulement de la cuisson, un fonction défectueux est identifié et au moins un signal d'avertissement de nature optique et/ou acoustique est généré.

7. Procédé selon la revendication 1, 4 ou 6, **caractérisé en ce que** la détection des allures de température comprend une détermination des différences entre la température en surface Tₒ et une température dans l'enceinte de cuisson GT, et
une absence de piquage est identifiée si la différence, entre la température en surface Tₒ et la température d'enceinte de cuisson GT, est supérieure à une quatrième valeur seuil ΔT₄ à un cinquième instant t₅.

8. Procédé selon la revendication 7, **caractérisé en ce que**, en cas d'absence identifiée de piquage, des dérivées premières de la température de surface Tₒ sont déterminées, et
on identifie que la sonde de processus de cuisson se trouve à l'intérieur de l'enceinte de cuisson si les dérivées premières de la température en surface Tₒ sont différentes de zéro et, autrement, on identifie que la sonde est disposée à l'extérieur de l'enceinte de cuisson.
